# EUROPEAN PATENT APPLICATION

(11) **EP 2 448 236 A2**
(43) Date of publication of application: **02.05.2012**
(21) Application number: 11183260.6
(22) Date of filing: 29.09.2011
(51) Int. Cl.: H04N 1/00

(54) **Method to store document using image forming apparatus and system to perform the same**

(30) Priority: 26.10.2010 KR 20100104739
(71) Applicant: Samsung Electronics Co., Ltd., Suwon-si, Gyeonggi-do 442-742 (KR)
(72) Inventor: Park, Seong-il, Seoul (KR); Park, In-cheon, Hwaseong-si (KR)
(74) Representative: Waddington, Richard

(57) **Abstract**

A method to store a document using an image forming apparatus and a system to perform the same. The method to store a document using an image forming apparatus to perform at least one function includes: converting first data indicating a document to be worked on and having a format to perform at least one function in the image forming apparatus to second data indicating the document to be worked on; storing the first data and synchronization information in the image forming apparatus; and storing the converted second data in at least one of the image forming apparatus and an external apparatus connected to the image forming apparatus.

## Description

### BACKGROUND

### 1. Field

The present disclosure relates to a method to store a document using an image forming apparatus and a system to perform the same.

### 2. Description of the Related Art

Image forming apparatuses, including printers, scanners, and multi-function peripherals, may perform at least one of the functions of printing, scanning, copying, fax transmission and reception, email transfer, and file transfer to a server. Such image forming apparatuses may store data generated while performing various functions therein, and the stored data has a format optimized to attributes of a printing job and a scanning job. Thus, when a user desires to view the data stored in an image forming apparatus, a separate application to convert the data stored in the image forming apparatus and executing the application is required. In addition, log information to store a job history of all jobs performed in an image forming apparatus used by a plurality of users exists to reinforce security in the image forming apparatus, and a separate secure server to store the log information is required.

### SUMMARY

The present disclosure provides a method to store a document using an image forming apparatus satisfying security requirements while increasing user convenience and a system to perform the same.

The present disclosure also provides a non-transitory computer-readable recording medium having recorded thereon a computer readable program to execute the method.

The present disclosures are not limited thereto, and other disclosures may exist.

According to the present invention there is provided an apparatus and method as set forth in the appended claims. Other features of the invention will be apparent from the dependent claims, and the description which follows.

According to an aspect of the present disclosure, there is provided a method to store a document using an image forming apparatus to perform at least one function, the method including: converting first data indicating a document to be worked on and having a format to perform at least one function in the image forming apparatus to second data indicating the document to be worked on and having a format viewable in a general purpose computer system; generating synchronization information to map the document to be worked on to the converted second data; storing the first data and the synchronization information in the image forming apparatus; and storing the converted second data in at least one of the image forming apparatus and an external apparatus connected to the image forming apparatus.

According to another aspect of the present disclosure, there is provided a non-transitory computer-readable recording medium having recorded thereon a computer readable program to execute the method.

According to another aspect of the present disclosure, there is provided an image forming apparatus to perform at least one function, the image forming apparatus including: a converter to convert first data indicating a document to be worked on and having a format to perform at least one function in the image forming apparatus to second data indicating the document to be worked on and having a format viewable in a general purpose computer system; a synchronization information generator to generate synchronization information to map the document to be worked on to the converted second data; a first storage unit to store the first data and the synchronization information in the image forming apparatus; and a controller to control to perform at least one of a job of storing the converted second data in the image forming apparatus and a job of transmitting the converted second data to an external apparatus connected to the image forming apparatus.

### BRIEF DESCRIPTION OF THE DRAWINGS

The above and other features and advantages of the present disclosure will become more apparent by describing in detail exemplary embodiments thereof with reference to the attached drawings in which:
FIG. 1 illustrates a using environment of an image forming apparatus according to an exemplary embodiment of the present disclosure;
FIG. 2 is a block diagram of an image forming apparatus according to an exemplary embodiment of the present disclosure;
FIG. 3 is a block diagram of an image forming apparatus, an external apparatus, and a general purpose computer system, according to an exemplary embodiment of the present disclosure;
FIG. 4 illustrates a method of setting setup information, according to an exemplary embodiment of the present disclosure;
FIG. 5 illustrates a method of setting setup information, according to another exemplary embodiment of the present disclosure;
FIG. 6 illustrates a method of setting setup information, according to another exemplary embodiment of the present disclosure;
FIG. 7 illustrates a method of converting first data to second data for each document box of an image forming apparatus, according to an exemplary embodiment of the present disclosure;
FIG. 8 is a flowchart of a method of storing a document, according to an exemplary embodiment of the present disclosure; and
FIG. 9 is a flowchart of a method of storing a document, according to another exemplary embodiment of the present disclosure.

### DETAILED DESCRIPTION

The present disclosure will now be described more fully with reference to the accompanying drawings, in which exemplary embodiments of the present disclosure are shown.

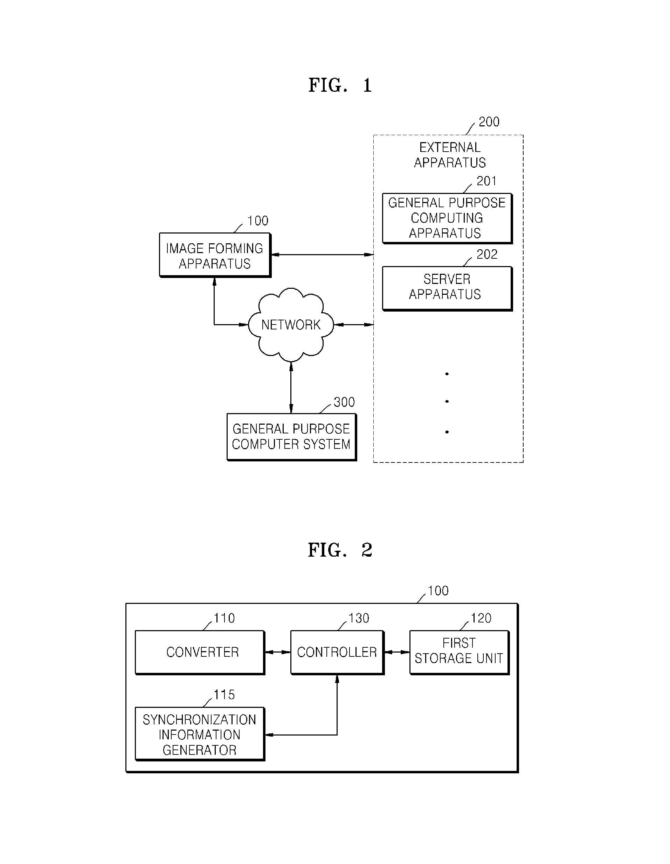

FIG. 1 illustrates a using environment of an image forming apparatus 100 according to an exemplary embodiment of the present disclosure. Referring to FIG. 1, the image forming apparatus 100 may be connected to an external apparatus 200 and a general purpose computer system 300.

The image forming apparatus 100, the external apparatus 200, and the general purpose computer system 300 may transmit and receive data through a wired/wireless network or wired serial communication by using a communication module prepared in each of the image forming apparatus 100, the external apparatus 200, and the general purpose computer system 300. Here, the network includes the lnternet, a Local Area Network (LAN), a Wireless LAN, a Wide Area Network (WAN), and a Personal Area Network (PAN) but is not limited thereto, and the network may be another type network to transmit and receiving information.

The image forming apparatus 100 is a device for forming an image and may include a printer, a scanner, and a Multi-Function Peripheral (MFP). In addition, the image forming apparatus 100 performs at least one function. Here, the at least one function may include printing, scanning, copying, fax transmission and reception, email transfer, and file transfer to a server but is not limited thereto.

The external apparatus 200 includes any apparatus connectable to the image forming apparatus 100 through a wired/wireless network or wired serial communication. Referring to FIG. 1, the external apparatus 200 may include a general purpose computing apparatus 201 and a server apparatus 202 but is not limited thereto.

The general purpose computing apparatus 201 according to an exemplary embodiment of the present disclosure may include any apparatus for processing data. Thus, the general purpose computing apparatus 201 may be a host device to control the image forming apparatus 100. In addition, the server apparatus 202 according to an exemplary embodiment of the present disclosure may include a File Transfer Protocol (FTP) server and a Server Message Block (SMB) server.

A user according to an exemplary embodiment of the present disclosure may view a document acquired by the image forming apparatus 100 through the general purpose computer system 300. In this case, data viewable in the general purpose computer system 300, which indicates the document acquired by the image forming apparatus 100, may be stored in the image forming apparatus 100 or the external apparatus 200. In addition, the general purpose computer system 300 according to an exemplary embodiment of the present disclosure may access at least one of the image forming apparatus 100 and the external apparatus 200 via a network and includes a display device to view data stored in at least one of the image forming apparatus 100 and the external apparatus 200.

In addition, the general purpose computer system 300 may include any apparatus for processing data, and accordingly, the general purpose computer system 300 may be a host device, a Personal Digital Assistant (PDA), a cellular phone, or a portable terminal to control the image forming apparatus 100.

FIG. 2 is a block diagram of the image forming apparatus 100 according to an exemplary embodiment of the present disclosure. Referring to FIG. 2, the image forming apparatus 100 according to the current embodiment includes a converter 110, a synchronization information generator 115, a first storage unit 120, and a controller 130.

The image forming apparatus 100 shown in FIG. 2 shows only components related to the current embodiment. Thus, those of ordinary skill in the art would understand that other general purpose components, besides the components shown in FIG. 2, may be further included.

In addition, each of the converter 110, the synchronization information generator 115, and the controller 130 of the image forming apparatus 100, which are shown in FIG. 2, may correspond to one or more processors. Each processor may be implemented with an array of a plurality of logic gates or a combination of a general purpose microprocessor and a memory storing therein a program executable in the general purpose microprocessor. In addition, those of ordinary skill in the art would understand that the processor may be implemented with a type of hardware.

The converter 110 converts first data indicating a document to be worked on and having a format to perform at least one function in the image forming apparatus 100 to second data indicating the document to be worked on and having a format viewable in the general purpose computer system 300. That is, the first data and the second data according to the current embodiment indicate the same document to be worked on but have a different data format.

The first data according to the current embodiment has a format corresponding to at least one function to perform the at least one function performed in the image forming apparatus 100. Here, the format corresponding to the at least one function, which is a type of data stored in the image forming apparatus 100, may have a printable format optimized to a scanning job or a printing job but is not limited thereto.

For example, when a scanning job of a document to be worked on is performed in the image forming apparatus 100, the first data may be scan data. Here, the scan data may have a format, for example, such as T4, Joint Photographic Experts Group (JPEG), Tagged Image File Format (TIFF), or Portable Document Format (PDF).

As another example, when a copying job of a document to be worked on is performed in the image forming apparatus 100, the first data may be copy data. Here, the copy data may have a format, for example, such as Joint Bi-level Image Experts Group (JBIG).

As another example, when a printing job of a document to be worked on is performed in the image forming apparatus 100, the first data may be print data. Here, the print data may have a format, for example, such as bitmap.

As another example, when a fax transmitting and receiving job of a document to be worked on is performed in the image forming apparatus 100, the first data may be fax data. Here, the fax data may have a format, for example, such T4.

The second data according to the current embodiment has a format viewable in the general purpose computer system 300. Here, the format viewable in the general purpose computer system 300 may be PDF but is not limited thereto.

In addition, the general purpose computer system 300 according to the current embodiment includes any apparatus capable of viewing a document. For example, when the second data has a format, for example, such as PDF, the general purpose computer system 300 may be an apparatus to display a document of a PDF format so that a user may view the document of a PDF format.

In addition, the converter 110 according to the current embodiment performs image synchronization according to the conversion of the first data to the second data. For example, the second data converted by the converter 110 corresponds to the first data. That is, compared with the first data, the second data has the same contents except for its format. Accordingly, the converter 110 performs image synchronization and converts the first data to the second data.

As described above, the converter 110 converts the first data to perform a function in the image forming apparatus 100 to the second data viewable in the general purpose computer system 300. Accordingly, the converter 110 may be an interpreter but is not limited thereto.

Since a method of converting the first data to the second data in the converter 110 is one known by those of ordinary skill in the art, a detailed description thereof will be omitted.

The synchronization information generator 115 generates synchronization information to map the document to be worked on to the second data converted by the converter 110. Here, the synchronization information according to the current embodiment may include at least one of information regarding the document to be worked on, a storage location of the first data, and a storage location of the second data. In addition, the synchronization information may be implemented in the form of a database (DB) and stored in the image forming apparatus 100.

In this case, the synchronization information to map the document to be worked on to the second data indicates information for linking the second data, which corresponds to the document to be worked on, to the document to be worked on. In addition, the synchronization information according to the current embodiment is not limited to the information and may further include synchronization information to map the document to be worked on to the first data and synchronization information to map the first data to the second data.

For example, the synchronization information indicates information regarding the second data is to be searched for by using the information regarding the document to be worked on. Accordingly, the synchronization information includes at least one of the information regarding the document to be worked on, the storage location of the first data, and the storage location of the second data.

That is, the image forming apparatus 100 stores the first data to perform various jobs for the document to be worked on. In addition, the converter 110 according to the current embodiment converts the first data to the second data, the synchronization information generator 115 generates the synchronization information to map the document to be worked on to the converted second data, and the generated synchronization information is stored in the first storage unit 120.

For example, when the user desires to view the document to be worked on using the general purpose computer system 300, the user inputs the information regarding the document to be worked on, which is desired to view, through the general purpose computer system 300. In this case, the image forming apparatus 100 may search for the second data corresponding to the document to be worked on, which has been input by the user, by referring to the synchronization information stored in the first storage unit 120.

Thus, the synchronization information generator 115 may include the information regarding the document to be worked on, the storage location of the first data, and the storage location of the second data, and the general purpose computer system 300 may display the second data by referring to the storage location of the second data included in the synchronization information.

Accordingly, when the document to be worked on is viewed through the general purpose computer system 300, the document to be worked on may be easily searched for from among a number of documents existing in the image forming apparatus 100 used by a plurality of users.

The first storage unit 120 stores therein the first data to perform at least one function in the image forming apparatus 100 and the synchronization information. Here, the first data has a format corresponding to at least one function to perform the at least one function performed in the image forming apparatus 100, and the first storage unit 120 stores the first data in the format corresponding to the at least one function. For example, if the first data is print data, the first storage unit 120 stores the first data in a bitmap format, which may be an embodiment of the print data.

The synchronization information will now be described in more detail. The synchronization information includes at least one of the information regarding the document to be worked on, the storage location of the first data, and the storage location of the second data. In addition, the synchronization information may be stored in the form of a DB. Here, the information regarding the document to be worked on may include various types of information, for example, such as a name, a size, a creator, a creation date of the document to be worked on, and each of the storage locations of the first data and the second data may be a path of a location in a memory in which corresponding data is stored.

Accordingly, when the user desires to view the document to be worked on using the general purpose computer system 300, the controller 130 may display the second data on the general purpose computer system 300 by referring to the storage location of the second data corresponding to the document to be worked on included in the synchronization information stored in the first storage unit 120.

For example, when the user desires to view the document to be worked on using the general purpose computer system 300, the controller 130 may search for the storage location of the second data mapped to the document to be worked on by using a DB query so that the second data is displayed on the general purpose computer system 300.

In addition, when the user desires to perform various jobs associated with the document to be worked on using the general purpose computer system 300, the controller 130 may search for the storage location of the first data mapped to the document to be worked on by using a DB query so that the various jobs are performed by using the first data in the image forming apparatus 100.

The first storage unit 120 according to the current embodiment is a typical storage medium, and those of ordinary skill in the art would know that the first storage unit 120 includes any of a Hard Disk Drive (HDD), a large-capacity Read Only Memory (ROM), a Random Access Memory (RAM), a flash memory, and a memory card.

The controller 130 controls the general function of the image forming apparatus 100. In addition, the controller 130 according to the current embodiment controls to perform at least one of a job of storing the second data converted by the converter 110 in the image forming apparatus 100 and a job of transmitting the second data to the external apparatus 200 connected to the image forming apparatus 100.

For example, the controller 130 may perform a storing job of storing the second data in the image forming apparatus 100, perform a transmission job of transmitting the second data to the external apparatus 200 connected to the image forming apparatus 100, or perform both the storing job and the transmission job.

In this case, the second data has a format viewable in the general purpose computer system 300, and is stored in the image forming apparatus 100 or transmitted to the external apparatus 200 in the format. In addition, the second data transmitted to the external apparatus 200 may be stored in the external apparatus 200 in a format viewable in the general purpose computer system 300.

In addition, when the second data to be viewed in the general purpose computer system 300 is stored in the image forming apparatus 100 with reference to the synchronization information stored in the first storage unit 120, the controller 130 transmits the second data to the general purpose computer system 300.

When the second data to be viewed in the general purpose computer system 300 is stored in the external apparatus 200 with reference to the synchronization information stored in the first storage unit 120, the controller 130 transmits information for searching for the second data stored in the external apparatus 200 to the general purpose computer system 300.

Accordingly, when the user desires to view the document to be worked on using the general purpose computer system 300, the user may view the second data stored in any one of the image forming apparatus 100 and the external apparatus 200 by using the general purpose computer system 300 with reference to the synchronization information stored in the image forming apparatus 100. Here, since the second data has a format viewable in the general purpose computer system 300, the user may view the document to be worked on without any additional conversion process for the second data.

That is, the image forming apparatus 100 stores the document to be worked on in the form of the first data to quickly perform a job. In this case, when the user desires to view the document to be worked on, the first data must be converted to the second data having a format viewable in the general purpose computer system 300.

Also, the image forming apparatus 100 according to the current embodiment may store the second data indicating the document to be worked on and having a format viewable in the general purpose computer system 300 in at least one of the image forming apparatus 100 and the external apparatus 200 so that the user may conveniently view the document to be worked on without an additional conversion process.

Thus, the user may view the document to be worked on without installing an additional application to view the document to be worked on using the general purpose computer system 300.

In addition, the second data according to the current embodiment may be used as log information that is information regarding a usage history of the image forming apparatus 100. The log information according to the current embodiment may be information regarding a usage history according to a security solution, for example, such as an image log solution.

As described above, the converter 110 according to the current embodiment performs image synchronization. That is, since the first data and the second data have the same contents except for their format, the second data according to the current embodiment may be used as log information that is information regarding a usage history of the image forming apparatus 100.

The second data according to the current embodiment may be stored in the image forming apparatus 100 or the external apparatus 200. Thus, since the image forming apparatus 100 according to the current embodiment may store information regarding a usage history of the image forming apparatus 100, without an additional application for gathering and storing log information or a separate server to store the log information according a security solution, the image forming apparatus 100 may satisfy security requirements.

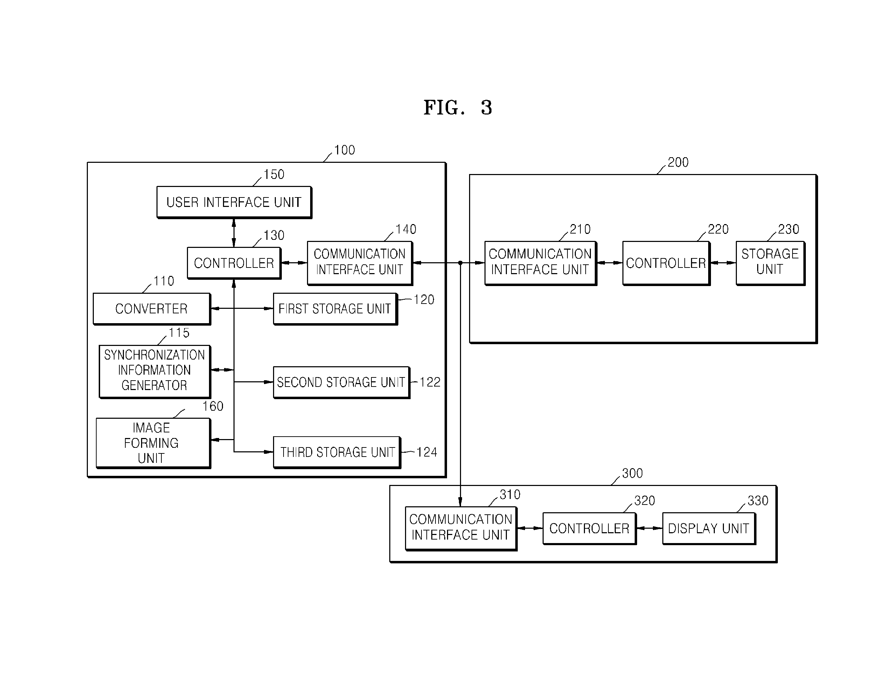

FIG. 3 is a block diagram of the image forming apparatus 100, the external apparatus 200, and the general purpose computer system 300, according to an exemplary embodiment of the present disclosure. Referring to FIG. 3, the image forming apparatus 100 according to the current embodiment includes the converter 110, the synchronization information generator 115, the first storage unit 120, the second storage unit 122, a third storage unit 124, the controller 130, a communication interface unit 140, a user interface unit 150, and an image forming unit 160, the external apparatus 200 includes a communication interface unit 210, a controller 220, and a storage unit 230, and the general purpose computer system 300 includes a communication interface unit 310, a controller 320, and a display unit 330.

The image forming apparatus 100, the external apparatus 200, and the general purpose computer system 300 shown in FIG. 3 show only components related to the current embodiment. Thus, those of ordinary skill in the art would understand that other general purpose components, besides the components shown in FIG. 3, may be further included.

In addition, the image forming apparatus 100, the external apparatus 200, and the general purpose computer system 300 shown in FIG. 3 correspond to an exemplary embodiment of the image forming apparatus 100, the external apparatus 200, and the general purpose computer system 300 shown in FIGS. 1 and 2. Accordingly, the image forming apparatus 100, the external apparatus 200, and the general purpose computer system 300 according to the current embodiment are not limited to the units shown in FIG. 3. In addition, since the contents disclosed in association with FIGS. 1 and 2 may be applied to the image forming apparatus 100, the external apparatus 200, and the general purpose computer system 300 shown in FIG. 3, a duplicate description will be omitted herein.

The image forming apparatus 100 according to the current embodiment converts first data indicating a document to be worked on and having a format to perform at least one function to second data indicating the document to be worked on and having a format viewable in the general purpose computer system 300, generates synchronization information to map the document to be worked on to the second data, stores the first data and the synchronization information, and stores the converted second data in the image forming apparatus 100 or transmits the converted second data to the external apparatus 200.

The converter 110 converts the first data indicating the document to be worked on and having a format to perform at least one function in the image forming apparatus 100 to the second data indicating the document to be worked on and having a format viewable in the general purpose computer system 300. The synchronization information generator 115 generates synchronization information to map the document to be worked on to the second data, the first storage unit 120 stores therein the first data and the synchronization information, and the second storage unit 122 stores therein the second data.

The second storage unit 122 according to the current embodiment may be used as a share folder accessible from the outside of the image forming apparatus 100 through a network. For example, data stored in the second storage unit 122 of the image forming apparatus 100 may be viewed through the general purpose computer system 300 by using a Common lnternet File System (CIFS), SMB, or Network File System (NFS) protocol.

As described above, the image forming apparatus 100 includes the second storage unit 122 to store the second data having a format viewable in the general purpose computer system 300, and a user may view the second data stored in the second storage unit 122 by using the general purpose computer system 300 without a separate conversion process. In addition, since the separate conversion process is not required, an additional application to view the document to be worked on acquired by the image forming apparatus 100 is not required, either.

The third storage unit 124 stores setup information including at least one of a condition of performing a job of converting the first data to the second data, a location in which the second data is stored, and a format of the second data. Here, the setup information may be set by a user through the user interface unit 150, or if there is no user setup, setup information set with default settings may exist.

For example, the third storage unit 124 stores setup information indicating the condition of performing the job of converting the first data to the second data.

In this case, the condition of performing the conversion job includes information regarding a function of performing the conversion job in the converter 110 among at least one function performable in the image forming apparatus 100 and information regarding a time of performing the conversion job.

The information regarding the function of performing the conversion job will now be described with an example. When the image forming apparatus 100 according to the current embodiment performs a plurality of functions according to a printing job, a fax transmitting and receiving job, a copying job, and a scanning job, the setup information may include a function of performing the conversion job from among the plurality of functions.

The user may select the function of performing the conversion job from among the plurality of functions through the user interface unit 150. The controller 130 stores information regarding the function of performing the conversion job from among the plurality of functions as the setup information by referring to input information according to the user's selection in the third storage unit 124. Accordingly, the controller 130 determines whether to perform the job of converting the first data to the second data by referring to the setup information stored in the third storage unit 124 and controls the converter 110 according to a result of the determination.

For example, the user may select the printing job and the fax transmitting and receiving job as the function of performing the conversion job through the user interface unit 150. Accordingly, the controller 130 sets the printing job and the fax transmitting and receiving job as the function of performing the conversion job, sets the copying job and the scanning job as a function of not performing the conversion job, and controls the third storage unit 124 to store this setup information.

Accordingly, when the printing job or the fax transmitting and receiving job for the document to be worked on is performed in the image forming apparatus 100, the controller 130 controls the converter 110 to perform the job of converting the first data corresponding to the document to be worked on to the second data.

In addition, when the copying job or the scanning job for the document to be worked on is performed in the image forming apparatus 100, the controller 130 controls the converter 110 not to perform the job of converting the first data corresponding to the document to be worked on to the second data.

However, when the second data according to the current embodiment is used as the log information that is information regarding a usage history of the image forming apparatus 100, the controller 130 may control the converter 110 to perform the conversion job for the first data corresponding to every document to be worked on acquired by the image forming apparatus 100.

That is, since the second data includes all the usage history of the image forming apparatus 100 in order for the second data to be used as the log information, when the second data is used as the log information, the setup information may be set so that the conversion job is performed for every function performable in the image forming apparatus 100.

Accordingly, since information regarding the entire usage history of the image forming apparatus 100 may exist as the second data, the second data may be used as the log information. Thus, security of the image forming apparatus 100 may be reinforced through the conversion job and the storage of the second data.

The time of performing the conversion job will now be described with an example. The setup information may include information regarding a time of performing a job of converting the first data to the second data. Here, the time of performing the conversion job may include various times, for example, such as a time of acquiring the first data in the image forming apparatus 100, a time according to a predetermined period of time (e.g., 4 a.m. daily, 4 a.m. on the last day monthly, etc.), a time of requesting, by the user, for a view of the document to be worked on, and a time of receiving an access request through a network.

Those of ordinary skill in the art would know that the time of performing the conversion job is not limited to the above-described times and the setup information may include a plurality of times as information regarding the time of performing the conversion job.

The user may select at least one time of performing the conversion job from among the plurality of times through the user interface unit 150. In this case, the controller 130 stores information regarding the time of performing the conversion job among the plurality of times as the setup information in the third storage unit 124 by referring to input information according to the user's selection. Accordingly, the controller 130 determines whether to perform the job of converting the first data to the second data by referring to the setup information stored in the third storage unit 124 and controls the converter 110 according to a result of the determination.

For example, the user may select the time of acquiring the first data in the image forming apparatus 100 as the time of performing the conversion job through the user interface unit 150. Accordingly, the controller 130 sets the time of acquiring the first data in the image forming apparatus 100 as the time of performing the conversion job and controls the third storage unit 124 to store this setup information.

Accordingly, when the image forming apparatus 100 acquires the first data, the controller 130 controls the converter 110 to perform the job of converting the first data to the second data.

In this case, the time of acquiring the first data in the image forming apparatus 100 may be a time of generating the first data according to a result of scanning an image when performing the scanning job or a copying job for the document to be worked on in the image forming apparatus 100.

Alternatively, the time of acquiring the first data in the image forming apparatus 100 may be a time of receiving the first data according to a result of receiving print data from a host device when performing a printing job for the document to be worked on in the image forming apparatus 100.

Alternatively, the time of acquiring the first data in the image forming apparatus 100 may be a time of generating the first data according to a result of scanning an image when performing a fax transmitting job in the image forming apparatus 100 receiving the first data according to a result of receiving fax data from a fax machine when performing a fax receiving job in the image forming apparatus 100.

Those of ordinary skill in the art would know that the time of acquiring the first data in the image forming apparatus 100 is not limited to the disclosure described above and may further include various embodied illustrations.

As another example, the user may select the time of requesting, by the user, for a view of the document to be worked on and the time of receiving an access request through a network as the time of performing the conversion job through the user interface unit 150. Accordingly, the controller 130 sets the time of requesting, by the user, for a view of the document to be worked on and the time of receiving an access request through a network as the time of performing the conversion job and controls the third storage unit 124 to store this setup information.

Accordingly, when the user requests for a view of the document to be worked on and when an access request is received through a network, the controller 130 controls the converter 110 to perform the job of converting the first data to the second data.

In this case, the time of requesting, by the user, for a view of the document to be worked on may be a time of requesting, by the user, for a view of the document to be worked on through the general purpose computer system 300 (e.g., a host device).

Alternatively, the time of requesting an access through a network may be a time of requesting, by the user, for an access to the image forming apparatus 100 through a network by using the general purpose computer system 300 (e.g., a host device). In this case, the user may request for a reading job, a copying job, and a moving job for the document to be worked on together with requesting for an access to the image forming apparatus 100 by using the general purpose computer system 300. Here, the reading job indicates viewing the document to be worked on, the copying job indicates creating a copy of the document to be worked on, and the moving job indicates storing the document to be worked on in another storage location.

As described above, the time of requesting an access to the image forming apparatus 100 through a network by using the general purpose computer system 300 may include a case where the user accesses the image forming apparatus 100 by using a web User Interface (Ul) prepared in the general purpose computer system 300, and so forth.

For example, the user may request for an access to the image forming apparatus 100 by inputting an lnternet Protocol (lP) address of the image forming apparatus 100 on a web browser of the general purpose computer system 300.

Accordingly, the third storage unit 124 may store various types of setup information regarding the condition of performing the conversion job in the converter 110, and the controller 130 determines whether to perform the conversion job in the converter 110 by referring to the setup information stored in the third storage unit 124 and controls the converter 110 according to a result of the determination.

Thus, since the image forming apparatus 100 may perform the job of converting the first data to the second data by referring to the setup information stored in the third storage unit 124, the image forming apparatus 100 may efficiently perform the conversion job according to the user's necessity. Accordingly, user convenience may be increased.

A location in which the second data stored in the third storage unit 124 according to the current embodiment will be described in detail when the controller 130 is described later.

The third storage unit 124 according to the current embodiment stores setup information indicating a format of the second data. The second data may have a format viewable in the general purpose computer system 300. For example, the second data may have various types of formats, such as PDF, JPEG, and TIF.

The user may select a format of the second data from among the plurality of formats through the user interface unit 150. The controller 130 stores information regarding a format of the second data among the plurality of formats as the setup information in the third storage unit 124 by referring to input information according to the user's selection. Accordingly, the controller 130 determines a format of the second data by referring to the setup information stored in the third storage unit 124 and controls the converter 110 according to a result of the determination.

For example, the user may select the format of the second data as PDF. Accordingly, the controller 130 sets the format of the second data as PDF and controls the third storage unit 124 to store this setup information.

Accordingly, the controller 130 controls the converter 110 to perform the conversion job so that the second data has a PDF-type format.

Thus, the user may conveniently view the document to be worked on in the image forming apparatus 100 by selecting a user preferable format since the user may select the format of the second data.

In addition, the first storage unit 120 and the second storage unit 122 according to the current embodiment may perform a document box function. That is, the first storage unit 120 and the second storage unit 122 may include at least one document box classified according to attributes to store data by distinguishing the data according to the attributes. The attributes according to the current embodiment may include a creator of the data, a time of generating the data, a place in which the data is created, a type of the data, whether to set security information in the data, and so forth.

For example, the first storage unit 120 and the second storage unit 122 may include embodied illustrations, for example, such as a common box, a public box, a secure box, and a user box, of the document box.

Accordingly, if the image forming apparatus 100 acquires the first data indicating the document to be worked on, the controller 130 may store the first data in a document box matched to attributes of the document to be worked on by referring to the attributes of the document to be worked on.

In this case, the common box is a storage space which every user may commonly use. Accordingly, a user of the image forming apparatus 100 may store new data in the common box and may further view, modify, delete, and edit data stored in the common box. The data stored in the common box according to the current embodiment may be data of which attributes are not matched to the public box, the secure box, and the user box.

The public box is a document box which every user of the image forming apparatus 100 may create. In addition, a user may store new data in the public box and may further view, modify, delete, and edit data stored in the public box.

The secure box is a document box which every user of the image forming apparatus 100 may create but in which limitation of an access to data stored in the secure box may be set. Only users authorized to access the secure box may view, modify, delete, and edit data stored in the secure box. For example, since attributes of data in which security information is set are identical to attributes of the secure box, the data in which security information is set may be stored in the secure box.

Although every user may create the user box in correspondence with each user, an access to a user box may be limited to a user who created the user box (a creator). Accordingly, only the user who created the user box may view, modify, delete, and edit data stored in the user box. However, those of ordinary skill in the art would know that a degree of limitation of an access to the user box may be differently set according to a creator's setup. For example, data created by a first user may be stored in a first user box, which is a document box of the first user.

Accordingly, the first storage unit 120 and the second storage unit 122 according to the current embodiment may include at least one document box, and the setup information stored in the third storage unit 124 includes information regarding a document box for which the conversion job is performed from among the at least one document box as an example of the condition of performing the job of converting the first data to the second data.

The information regarding a document box for which the conversion job is performed will now be described with an example. When the first storage unit 120 according to the current embodiment includes a secure box, a common box, a public box, and a user box, the setup information may include information regarding a document box for which the conversion job is performed from among the plurality of document boxes.

A user may select a document box for which the conversion job is performed from among the plurality of document boxes through the user interface unit 150. The controller 130 stores information regarding the document box for which the conversion job is performed from among the plurality of document boxes as the setup information in the third storage unit 124, by referring to input information according to the user's selection. Accordingly, the controller 130 determines whether to perform the job of converting the first data to the second data by referring to the setup information stored in the third storage unit 124 and controls the converter 110 according to a result of the determination.

For example, the user may select the secure box and the common box through the user interface unit 150 for which the conversion job is performed. Accordingly, the controller 130 sets the secure box and the common box as document boxes for which the conversion job is performed, sets the public box and the user box as document boxes for which the conversion job is not performed, and controls the third storage unit 124 to store this setup information.

Accordingly, since the attributes of the first data acquired by the image forming apparatus 100 are matched to attributes of the secure box or the common box, when the first data is stored in the secure box or the common box, the controller 130 controls the converter 110 to perform the job of converting the first data to the second data.

Alternatively, since the attributes of the first data acquired by the image forming apparatus 100 are matched to attributes of the public box or the user box, when the first data is stored in the public box or the user box, the controller 130 controls the converter 110 not to perform the job of converting the first data to the second data.

In addition, the second storage unit 122 according to the current embodiment may include at least one document box classified according to attributes to store the second data by distinguishing the second data according to the attributes, and the controller 130 may store the second data in a document box according to a document box in which the first data is stored from among the at least one document box included in the second storage unit 122.

For example, when the first data is stored in the secure box of the first storage unit 120, the converter 110 converts the first data to the second data, and the converted second data may be stored in a secure box of the second storage unit 122.

Thus, since the image forming apparatus 100 may perform the conversion job for data stored by distinguishing according to attributes of the data by using the document box function, the image forming apparatus 100 may efficiently perform the conversion job according to the user's necessity. Accordingly, user convenience may be increased.

However, when the second data according to the current embodiment is used as log information that is information regarding a usage history of the image forming apparatus 100, the controller 130 may control the converter 110 to perform the conversion job in every document box included in the first storage unit 120.

As described above, since the second data includes all the usage history of the image forming apparatus 100 in order for the second data to be used as the log information, when the second data is used as the log information, the setup information may be set so that the conversion job is performed for every document box included in the first storage unit 120.

Accordingly, since information regarding all the usage history of the image forming apparatus 100 may exist as the second data, the second data may be used as the log information. Thus, security of the image forming apparatus 100 may be reinforced through the conversion job and the storage of the second data.

The first, second, and third storage units 120, 122, and 124 according to the current embodiment are typical storage media, and those of ordinary skill in the art would know that the first, second, and third storage units 120, 122 and 124 include any of an HDD, a large-capacity ROM, a RAM, a flash memory, and a memory card.

In addition, the first, second, and third storage units 120, 122 and 124 according to the current embodiment may be united and constructed as one or two units. However, when the first, second, and third storage units 120, 122, and 124 according to the current embodiment are united and constructed as one or two units, those of ordinary skill in the art would know that each data may be distinguished and stored by using a method of dividing a storage space according to a partition function.

The controller 130 controls to perform at least one of the job of storing the second data converted by the converter 110 in the image forming apparatus 100 and the job of transmitting the second data to the external apparatus 200 connected to the image forming apparatus 100. In more detail, the controller 130 performs at least one of a storing job of storing the second data in the second storage unit 122 of the image forming apparatus 100 and a transmission job of transmitting the second data to the external apparatus 200 through the communication interface unit 140.

In this case, the controller 130 may perform at least one of the storing job and the transmission job by referring to a location in which the second data is stored in the third storage unit 124.

For example, when the second data is stored in the image forming apparatus 100 by referring to the location in which the second data is stored in the third storage unit 124, the controller 130 performs the storing job so that the second data is stored in the second storage unit 122. Here, those of ordinary skill in the art would know that a location in which the second data according to the current embodiment is stored may be a document box or a folder included in the second storage unit 122.

As another example, when the second data is stored in the external apparatus 200 outside the image forming apparatus 100 by referring to the location in which the second data is stored in the third storage unit 124, the controller 130 performs the transmission job so that the second data is transmitted to the external apparatus 200 through the communication interface unit 140. Here, those of ordinary skill in the art would know that a location in which the second data according to the current embodiment is stored may be a document box or a folder included in the external apparatus 200.

The communication interface unit 140 transmits the second data converted by the converter 110 to the external apparatus 200. In addition, the communication interface unit 140 according to the current embodiment may transmit and receive data to and from the external apparatus 200 and the general purpose computer system 300 through a network.

Here, the communication interface unit 140 according to the current embodiment may transmit and receive data to and from the external apparatus 200 and the general purpose computer system 300 by using a file sharing protocol (e.g., NFS or CIFS). Since those of ordinary skill in the art would know the file sharing protocol, a detailed description thereof will be omitted herein.

In addition, the communication interface unit 140 may include all of a modem used for fax transmission and reception, a network module for an access to a network, and a Universal Serial Bus (USB) host module for forming a data movement channel to a portable storage medium according to functions of the image forming apparatus 100.

The user interface unit 150 acquires input information from a user and displays output information to the user. For example, the user interface unit 150 includes input/output devices, for example, such as a display panel, a mouse, a keyboard, a touch screen, a monitor, and a speaker, usable in the image forming apparatus 100 and software modules for driving the input/output devices.

Accordingly, the user may set the setup information according to the current embodiment by operating the user interface unit 150, and the set setup information may be stored in the third storage unit 124.

The image forming unit 160 performs a printing job of print data on printing paper. The image forming unit 160 according to the current embodiment includes hardware units to perform charging, light-exposure, developing, transcription, and fixing to perform the printing job and software modules for driving the hardware units.

Accordingly, when the user desires to view a document to be worked on, which is acquired by the image forming apparatus 100, using the general purpose computer system 300, the user may view the document to be worked on by using the converted second data, so the user does not have to perform an additional conversion process.

In addition, since the second data may be used as log information, security requirements may be satisfied even without using a separate application or server.

The external apparatus 200 according to the current embodiment stores the second data received from the image forming apparatus 100. Referring to FIG. 3, the external apparatus 200 may include the communication interface unit 210, the controller 220, and the storage unit 230.

The communication interface unit 210 may transmit and receive data to and from the image forming apparatus 100 and the general purpose computer system 300.

The controller 220 controls the general function of the external apparatus 200. The controller 220 according to the current embodiment may correspond to one or a plurality of processors. Each processor may be implemented with an array of a plurality of logic gates or a combination of a general purpose microprocessor and a memory storing therein a program executable in the general purpose microprocessor. In addition, those of ordinary skill in the art would understand that the processor may be implemented with a type of hardware.

The storage unit 230 stores the second data transmitted from the image forming apparatus 100. The storage unit 230 according to the current embodiment is a typical storage medium, and those of ordinary skill in the art would know that the storage unit 230 includes any of an HDD, a large-capacity ROM, a RAM, a flash memory, and a memory card.

In addition, the storage unit 230 according to the current embodiment includes at least one document box classified according to attributes to store data by distinguishing the data according to the attributes, and the controller 220 may store the second data in a document box according to attributes of a document box in which the first data is stored from among the at least one document box included in the storage unit 230.

Since the contents according to the at least one document box included in the storage unit 230 of the external apparatus 200 would be known by those of ordinary skill in the art by referring to the contents described with reference to the second storage unit 122 of the image forming apparatus 100, a duplicate description will be omitted herein.

In addition, the storage unit 230 according to the current embodiment may be used as a share folder accessible through a network from the outside of the external apparatus 200. For example, data stored in the storage unit 230 of the external apparatus 200 may be viewed through the general purpose computer system 300 by using a CIFS, SMB, or NFS protocol.

Accordingly, the external apparatus 200 stores the second data transmitted from the image forming apparatus 100. In addition, those of ordinary skill in the art would know that since the second data may be used as log information that is information regarding a usage history of the image forming apparatus 100, when the second data is used as the log information, the external apparatus 200 may be used as a secure server to store the log information.

Thus, when the user desires to view a document to be worked on, the user may conveniently view the document to be worked on stored in the external apparatus 200 through the general purpose computer system 300 without an additional application.

The general purpose computer system 300 according to the current embodiment displays the second data stored in at least one of the image forming apparatus 100 and the external apparatus 200 by referring to the synchronization information stored in the image forming apparatus 100. Referring to FIG. 3, the general purpose computer system 300 may include the communication interface unit 310, the controller 320, and the display unit 330.

The communication interface unit 310 may transmit and receive data to and from the image forming apparatus 100 and the external apparatus 200.

The controller 320 controls the general function of the general purpose computer system 300. The controller 320 according to the current embodiment may correspond to one or a plurality of processors. Each processor may be implemented with an array of a plurality of logic gates or a combination of a general purpose microprocessor and a memory storing therein a program executable in the general purpose microprocessor. In addition, those of ordinary skill in the art would understand that the processor may be implemented with a type of hardware.

In addition, when the second data is stored in the image forming apparatus 100 by referring to the synchronization information stored in the image forming apparatus 100, the controller 320 controls to receive the second data from the image forming apparatus 100 through the communication interface unit 310.

In addition, when the second data is stored in the external apparatus 200 by referring to the synchronization information stored in the image forming apparatus 100, the controller 320 controls to receive the second data from the external apparatus 200 through the communication interface unit 310.

However, when the controller 130 of the image forming apparatus 100 controls to transmit the second data to the general purpose computer system 300 from the external apparatus 200 by referring to the synchronization information, those of ordinary skill in the art would know that the controller 320 of the general purpose computer system 300 may not repeatedly perform the same operation.

The display unit 330 displays the second data stored in at least one of the image forming apparatus 100 and the external apparatus 200. The display unit 330 according to the current embodiment displays output information to a user. For example, the display unit 330 includes output devices, for example, such as a display panel, a touch screen, and a monitor, usable in the general purpose computer system 300 and software modules for driving the output devices.

Accordingly, a user may conveniently view the document to be worked on through the general purpose computer system 300 by using the second data without a separate conversion process for the first data having a format used in the image forming apparatus 100 or an additional application.

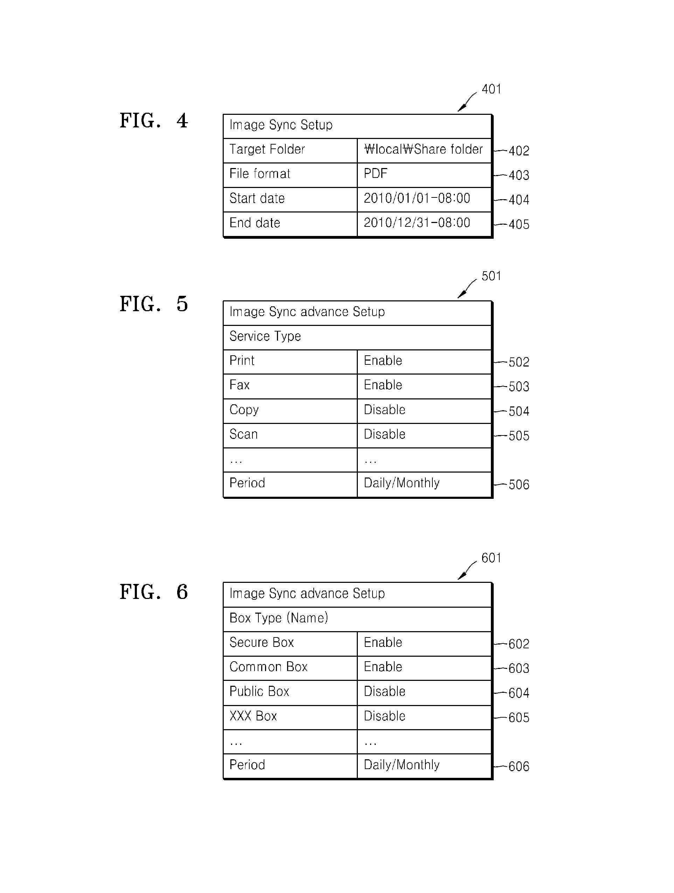

FIGS. 4 to 6 illustrate a method of setting setup information, according to exemplary embodiments of the present disclosure. Referring to FIGS. 4 to 6, a user may set setup information through the image forming apparatus 100 or a host device.

Hereinafter, although a case of setting setup information through the user interface unit 150 of the image forming apparatus 100 is illustrated for convenient of description, those of ordinary skill in the art would know that the present disclosure is not limited thereto and the setup information may be set by using a web Ul in the general purpose computer system 300, which is an example of a host device.

Accordingly, Graphic User Interfaces (GUls) shown in FIGS. 4 to 6 may be displayed on the user interface unit 150 of the image forming apparatus 100.

FIG. 4 illustrates a method of setting setup information, according to an exemplary embodiment of the present disclosure.

Referring to a GUI 401, a user may set a target folder 402 indicating a location in which second data is stored and set a file format 403 of the second data. In addition, the user may set a start date 404 and an end date 405 on which a job of converting first data having a format to perform a function of the image forming apparatus 100 to second data having a format viewable in the general purpose computer system 300 is performed.

Accordingly, the user may conveniently set setup information used to perform the job of converting first data to second data.

FIG. 5 illustrates a method of setting setup information, according to another exemplary embodiment of the present disclosure.

A user according to the current embodiment may set a condition of performing a job of converting first data to second data.

Referring to a GUI 501, the user may set information regarding a function of performing the conversion job from among a plurality of functions performed in the image forming apparatus 100.

For example, the user may set the conversion job to be performed for a printing job 502 and a fax job 503 and not to be performed for a copying job 504 and a scanning job 505.

In addition, the user may set information regarding a period 506 of performing the conversion job. For example, the user may set the conversion job to be performed at a predetermined time daily, monthly, or weekly.

As another example, those of ordinary skill in the art would know that the user may set the conversion job to be performed at a time of acquiring first data in the image forming apparatus 100 or a time of viewing by the user a document to be worked on.

Accordingly, the user may conveniently set setup information associated with the condition of performing the job of converting first data to second data.

FIG. 6 illustrates a method of setting setup information, according to another exemplary embodiment of the present disclosure.

When the image forming apparatus 100 according to the current embodiment includes a document box, a user may set a condition of performing a job of converting first data to second data on each document box. Referring to a GUI 601, the user may set information regarding a document box to perform a conversion job from among a plurality of document boxes existing in the image forming apparatus 100.

For example, the user may set the conversion job to be performed for first data stored in a secure box 602 and a common box 603 and not to be performed for first data stored in a public box 604 and a user (XXX) box 605.

In addition, the user may set information regarding a period 606 of performing the conversion job. Since the setting of information is the same as FIG. 5, except for that the information regarding the period 606 may be set on each document box, a detailed description thereof will be omitted herein.

Accordingly, when the document box function is implemented in the image forming apparatus 100, the user may conveniently set setup information associated with a condition of performing a job of converting first data to second data for each document box.

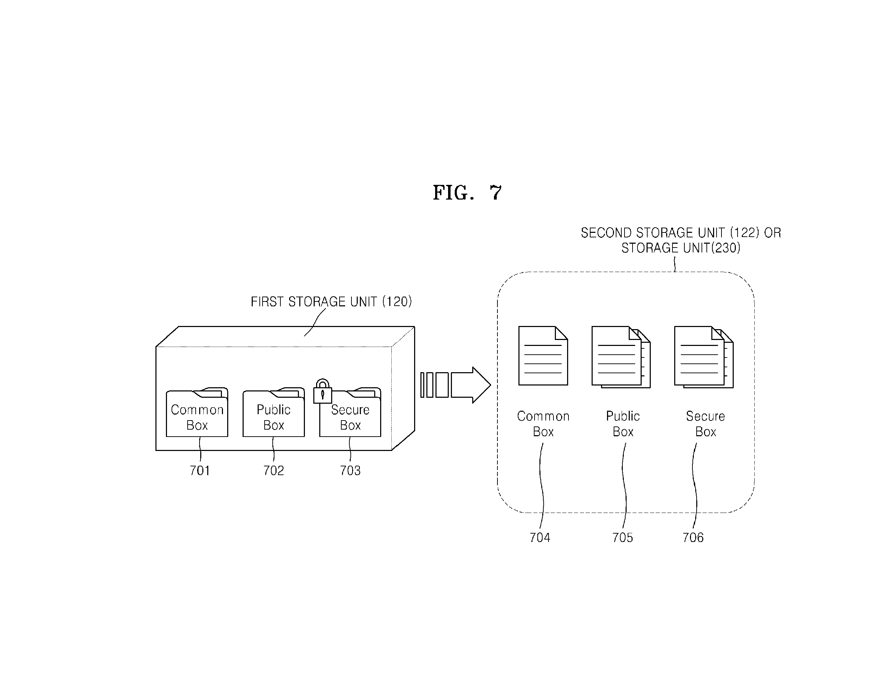

FIG. 7 illustrates a method of converting first data to second data for each document box of the image forming apparatus 100, according to an exemplary embodiment of the present disclosure.

Referring to FIG. 7, the first storage unit 120 of the image forming apparatus 100 may include a common box 701, a public box 702, and a secure box 703.

Accordingly, first data stored in the common box 701, the public box 702, and the secure box 703 of the first storage unit 120 may be distinguished and stored in a common box 704, a public box 705, and a secure box 706 included in the second storage unit 122 of the image forming apparatus 100 or the storage unit 230 of the external apparatus 200, respectively.

Accordingly, when the document box function is implemented in the image forming apparatus 100, first data distinguished and stored according to attributes of the first data may be converted to second data and automatically stored in a document box corresponding to the attributes of the first data.

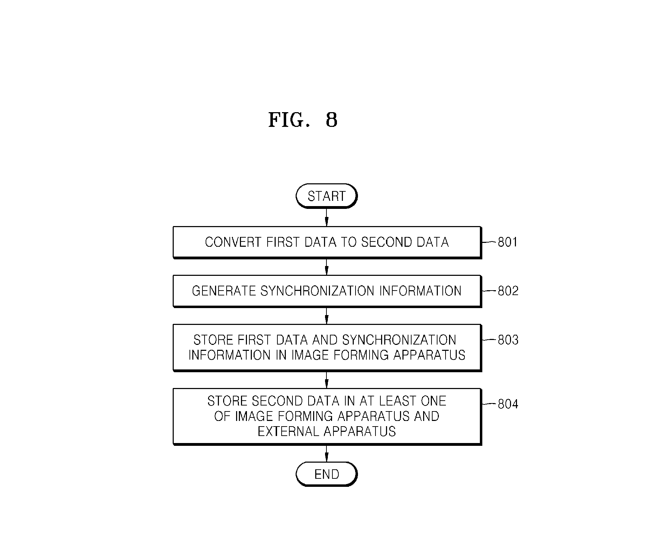

FIG. 8 is a flowchart of a method of storing a document, according to an exemplary embodiment of the present disclosure. Referring to FIG. 8, the method of storing data consists of operations processed according to time in the image forming apparatus 100, the external apparatus 200, and the general purpose computer system 300 shown in FIGS. 1 to 3. Accordingly, even if the contents omitted hereinafter exist, the above-described contents regarding the image forming apparatus 100, the external apparatus 200, and the general purpose computer system 300 shown in FIGS. 1 to 3 may also be applied to the method of storing data.

In operation 801, the converter 110 of the image forming apparatus 100 converts first data indicating a document to be worked on and having a format to perform at least one function in the image forming apparatus 100 to second data indicating the document to be worked on and having a format viewable in the general purpose computer system 300.

In operation 802, the synchronization information generator 115 generates synchronization information to map the document to be worked on to the second data converted in operation 801.

In operation 803, the first storage unit 120 of the image forming apparatus 100 stores the first data and the synchronization information generated in operation 802.

In operation 804, the controller 130 of the image forming apparatus 100 stores the second data converted in operation 801 in at least one of the image forming apparatus 100 and the external apparatus 200 connected to the image forming apparatus 100. Accordingly, the second data may be stored in the second storage unit 122 of the image forming apparatus 100 or the storage unit 230 of the external apparatus 200.

Accordingly, when a user desires to view a document to be worked on through the general purpose computer system 300, the user may conveniently view second data stored in the external apparatus 200 without an additional conversion process or application.

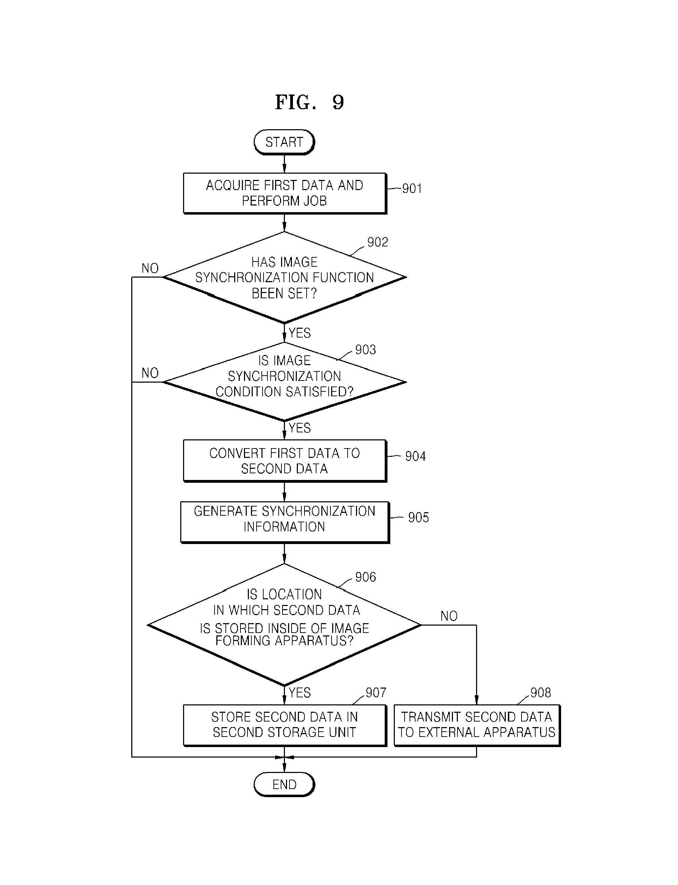

FIG. 9 is a flowchart of a method of storing a document, according to another exemplary embodiment of the present disclosure. Referring to FIG. 9, the method of storing a document consists of operations processed according to time in the image forming apparatus 100, the external apparatus 200, and the general purpose computer system 300 shown in FIGS. 1 to 3. Accordingly, even if the contents omitted hereinafter exist, the above-described contents regarding the image forming apparatus 100, the external apparatus 200, and the general purpose computer system 300 shown in FIGS. 1 to 3 may also be applied to the method of storing data.

In addition, in FIG. 9, for convenience of description, a function of performing a job of converting first data to second data is called an image synchronization function.

In operation 901, the image forming apparatus 100 acquires first data indicating a document to be worked on and performs jobs according to the data acquisition. The first data according to the current embodiment has a format according to the jobs performed in the image forming apparatus 100.

The operation of acquiring first data and performing jobs in the image forming apparatus 100 will now be described in more detail. The image forming apparatus 100 generates job information regarding a document to be worked on according to a job request of a user and generates first data indicating the document to be worked on according to the generated job information. For example, if the user's job request is a copying job, the first data may have a format, for example, such as JBIG. If the user's job request is a fax job, the first data may have a format, for example, such as T4 or JPEG. Accordingly, the image forming apparatus 100 performs a job for the document to be worked on according to the user job request by using the generated first data.

In operation 902, the controller 103 determines whether the image synchronization function has been set. Here, the controller 103 may refer to setup information stored in the third storage unit 124. According to a result of the determination of the controller 103, if the image synchronization function has been set, the process proceeds to operation 903, and otherwise if the image synchronization function has not been set, the process ends.

In operation 903, the controller 103 determines whether an image synchronization condition is satisfied. Here, the controller 103 may refer to the setup information stored in the third storage unit 124.

The image synchronization condition may be included in the setup information described above. For example, the setup information may include various types of information, such as a function of performing the image synchronization function among at least one function performed in the image forming apparatus 100, a time of performing the image synchronization function, and a type of a document box to perform the image synchronization function among a plurality of document boxes included in the image forming apparatus 100.

According to a result of the determination of the controller 103, if the image synchronization condition is satisfied, the process proceeds to operation 904, and otherwise if the image synchronization condition is not satisfied, the process ends.

In operation 904, the converter 110 of the image forming apparatus 100 converts the first data to second data. Here, the controller 103 may determine a format of the second data by referring to the setup information stored in the third storage unit 124 and may control the converter 110 so that the second data has the determined format.

In operation 905, the synchronization information generator 115 of the image forming apparatus 100 generates synchronization information to map the document to be worked on to the second data converted in operation 904.

In operation 906, the controller 103 determines whether a location in which the second data is stored is inside the image forming apparatus 100. Here, the controller 103 may refer to the setup information stored in the third storage unit 124. According to a result of the determination of the controller 103, if the location in which the second data is stored is inside the image forming apparatus 100, the process proceeds to operation 907, and otherwise if the location in which the second data is stored is not inside the image forming apparatus 100, the process proceeds to operation 908.

In operation 907, the controller 103 stores the second data in the second storage unit 122, and in operation 908, the controller 103 transmits the second data to the external apparatus 200 to store the second data in the storage unit 230 of the external apparatus 200.

Thus, the image forming apparatus 100 according to the current embodiment may convert data having a format used in the image forming apparatus 100 to data having a format viewable in the general purpose computer system 300 and store the converted data. Accordingly, a user may conveniently view the data used in the image forming apparatus 100 by using the converted and stored data having a format viewable in the general purpose computer system 300.

According to the present disclosure, when a user desires to view a document, the user may conveniently view the document using data viewable in a general purpose computer 300, which is stored in at least one of an image forming apparatus 100 and an external apparatus 200. In addition, security of the image forming apparatus 100 may be reinforced using data stored in at least one of the image forming apparatus 100 and the external apparatus 200.

The methods described above may be written as computer programs and may be implemented in general-use digital computers that execute the programs using a computer-readable recording medium. In addition, a structure of data used in the methods described above may be recorded in the computer-readable recording medium through various manners. Examples of the computer-readable recording medium include magnetic storage media (e.g., ROM, floppy disks, hard disks, etc.) and optical recording media (e.g., CD-ROMs, or DVDs).

While the present disclosure has been particularly shown and described with reference to exemplary embodiments thereof, it will be understood by those of ordinary skill in the art that various changes in form and details may be made therein without departing from the scope of the present disclosure as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method to store a document using an image forming apparatus performing at least one function, the method comprising:
converting first data indicating a document to be worked on and having a format to perform at least one function in the image forming apparatus to second data indicating the document to be worked on and having a format viewable in a general purpose computer system;
generating synchronization information to map the document to be worked on to the converted second data;
storing the first data and the synchronization information in the image forming apparatus; and
storing the converted second data in at least one of the image forming apparatus and an external apparatus connected to the image forming apparatus.

2. The method of claim 1, wherein the second data is used as log information that is information regarding a usage history of the image forming apparatus.

3. The method of claim 1, further comprising setting setup information containing at least one of a condition of performing a job of converting the first data to the second data, a location in which the second data is stored, and a format of the second data.

4. The method of claim 3, wherein the condition of performing the conversion job comprises information regarding a function of performing the conversion job from among the at least one function and information regarding a time of performing the conversion job.

5. The method of claim 1, wherein the storing of the first data comprises storing the first data in a document box according to attributes of the first data from among a plurality of document boxes classified according to attributes of stored data, and
further comprising setting setup information containing information regarding a document box to perform a job of converting the first data to the second data from among the plurality of document boxes.

6. The method of claim 5, wherein the storing of the second data comprises storing the second data in a document box according to the attributes of the document box in which the first data is stored.

7. The method of claim 1, wherein the synchronization information comprises at least one of information regarding the document to be worked on, a location in which the first data is stored, and a location in which the second data is stored.

8. A non-transitory computer-readable recording medium having recorded thereon a computer readable program to execute the method of any of claims 1 to 7.

9. An image forming apparatus to store at least one function, the image forming apparatus comprising:
a converter to convert first data indicating a document to be worked on and having a format to perform at least one function in the image forming apparatus to second data indicating the document to be worked on and having a format viewable in a general purpose computer system;
a synchronization information generator to generate synchronization information to map the document to be worked on to the converted second data;
a first storage unit to store the first data and the synchronization information in the image forming apparatus; and
a controller to control to perform at least one of a job of storing the converted second data in the image forming apparatus and a job of transmitting the converted second data to an external apparatus connected to the image forming apparatus.

10. The image forming apparatus of claim 9, wherein the second data is used as log information that is information regarding a usage history of the image forming apparatus.

11. The image forming apparatus of claim 9, further comprising a third storage unit to store setup information containing at least one of a condition of performing a job of converting the first data to the second data, a location in which the second data is stored, and a format of the second data.

12. The image forming apparatus of claim 11, further comprising a second storage unit to store the second data,
wherein when the second data is stored in the image forming apparatus by referring to the location in which the second data is stored in the third storage unit, the controller performs a job of storing the second data in the second storage unit.

13. The image forming apparatus of claim 11, further comprising a communication interface unit to transmit the second data to the external apparatus,
wherein when the second data is stored in an external apparatus outside the image forming apparatus by referring to the location in which the second data is stored in the third storage unit, the controller performs a job of transmitting the second data to the external apparatus through the communication interface unit.

14. A system to store a document, in which the image forming apparatus of any of claims 9 to 13 and an external apparatus are included, the system comprising:
the image forming apparatus to convert first data indicating a document to be worked on and having a format to perform at least one function in the image forming apparatus to second data indicating the document to be worked on and having a format viewable in a general purpose computer system, generating synchronization information to map the document to be worked on to the converted second data, storing the first data and the synchronization information, and transmitting the converted second data to the external apparatus; and
the external apparatus to store the second data transmitted from the image forming apparatus.

15. A system to view a document, in which the image forming apparatus of nay of claims 9 to 13, an external apparatus connected to the image forming apparatus, and a general purpose computer system are included, the system comprising:
the image forming apparatus to convert first data indicating a document to be worked on and having a format to perform at least one function in the image forming apparatus to second data indicating the document to be worked on and having a format viewable in the general purpose computer system, generating synchronization information to map the document to be worked on to the converted second data, storing the first data and the synchronization information, and performing at least one of a job of storing the converted second data in the image forming apparatus and a job of transmitting the converted second data to the external apparatus;
the external apparatus to store the second data transmitted from the image forming apparatus; and
the general purpose computer system to display the second data stored in at least one of the image forming apparatus and the external apparatus by referring to the synchronization information stored in the image forming apparatus.
